# EUROPÄISCHE PATENTSCHRIFT

(11) **EP 2 239 954 B1**
(45) Veröffentlichungstag und Bekanntmachung des Hinweises auf die Patenterteilung: **07.03.2018**
(21) Anmeldenummer: 10007920.1
(22) Anmeldetag: 05.09.2006
(51) Int. Cl.: H04M 7/06, H04M 7/00, H04Q 3/00, H04L 29/06

(54) **NETZÜBERGANGSEINHEIT UND STEUEREINHEIT ZUM WEITERLEITEN VON SIGNALISIERUNGSDATEN**
MEDIA GATEWAY AND MEDIA GATEWAY CONTROL FUNCTION FOR FORWARDING SIGNALLING DATA
PASSERELLE MÉDIA ET FONCTION DE CONTRÔLE DE PASSERELLE MÉDIA POUR TRANSMETTRE DES DONNÉES DE SIGNALISATION

(30) Priorität: 21.10.2005 DE 102005050587
(43) Veröffentlichungstag der Anmeldung: 13.10.2010
(62) Teilanmeldung aus: 06793219.4
(73) Patentinhaber: Siemens Aktiengesellschaft, 80333 München (DE)
(72) Erfinder: Belling, Thomas, Dr., 85435 Erding (DE); Kalleitner, Franz, 4880 St. Georgen im Attergau (AT); Seitter, Norbert, 87435 Kempten (DE); Trapp, Andreas, 81241 München (DE)

(56) Entgegenhaltungen:
- WO-A-02/052825
- WO-A-2004/091250
- US-A1- 2005 030 889
- "Gateway control protocol: H.248.1 packages for H.323 and H.324 interworking" ITU-T H.248.12, Juli 2001 (2001-07), XP017401374
- "Interworking of H-Series multimedia terminals with H-Series multimedia terminals and voice/voiceband terminals on GSTN and ISDN" ITU-T H.246 ANNEX F: H.323-H.324, Juli 2001 (2001-07), XP017401366
- LAKSHMI-RATAN R A: "THE LUCENT TECHNOLOGIES SOFTSWITCH - REALIZING THE PROMISE OF CONVERGENCE" BELL LABS TECHNICAL JOURNAL, Bd. 4, Nr. 2, April 1999 (1999-04), - Juni 1999 (1999-06) Seiten 174-195, XP000851517 ISSN: 1089-7089

## Beschreibung

Netzübergangseinheit und Steuereinheit zum Weiterleiten von Signalisierungsdaten. Die Erfindung betrifft unter anderem ein Verfahren zum Weiterleiten von Signalisierungsdaten in einer Netzübergangseinheit, mit dem folgenden Schritt:
- in einer Netzübergangseinheit bzw. einem Gateway aus einem ersten Datenübertragungsnetz (CS) Empfangen von Daten über eine Datenübertragungsverbindung bzw. über eine Transportverbindung, in der für einen Datenübertragungsdienst zwischen zwei Endgeräten (MS1, MS2) oder einer Gruppe von Endgeräten Signalisierungsdaten und Nutzdaten übertragen werden,
   wobei die Netzübergangseinheit Nutzdaten zwischen dem ersten Datenübertragungsnetz (CS), in dem gemäß einem ersten Signalisierungsverfahren signalisiert wird, und einem zweiten Datenübertragungsnetz (IMS) überträgt, in dem gemäß einem zweiten Signalisierungsverfahren signalisiert wird, wobei sich das erste Signalisierungsverfahren von dem zweiten Signalisierungsverfahren unterscheidet.
In dem International Telecommunication Union Standard ITU-T H.248.12 (07/2001) Series H: Audiovisual and Multimedia Systems, Infrastructure of audiovisual services - Communication procedures, Gateway control protocol: H248.1 packages for H.323 and H.324 interworking, werden verschiedene Packete definiert, die das Interworking zwischen H.323 Terminals und H.324 Terminals über Media Gateways unterstützen sollen.
Neben der so genannten "Circuit Switched (CS) Domain" eines auf dem 3rd Generation Partnership Project (3GPP) basierenden Mobilfunknetzes, kann auch das so genannte "IP Multimedia Subsystem" (IMS) für Sprach- und Videotelefonie genutzt werden, und ein so genanntes "Interworking" der betreffenden Dienste, d. h. ein Verbinden der Dienste mittels einer geeigneten Umwandlung der verwendeten Signalisierung und des verwendeten Transportformats der Daten, zwischen IMS und der CS Domain ist erforderlich. Das IMS wird neben den 3GPP "Global System for Mobile Communications" (GSM) und "Universal Mobile Telecommunications System" (UMTS) Zugangsnetzen auch für andere Zugangsnetze verwendet, beispielsweise "Wireless Local Area Network" (WLAN) und "Digital Subscriber Line" (DSL). Gerade in diesen Szenarien ist zuerst zu erwarten, dass Sprach- und Videotelefonie über das IMS erfolgen. Videotelefonie kann auch in einem öffentlichen Telefonnetz, d.h. einem so genannten "Public Switched Telephone Network (PSTN)", genutzt werden, wobei hier in der Regel für Transport und Signalisierung dieselben In-band Videotelefonie spezifischen Protokolle wie in der 3GPP CS Domain genutzt werden. Auch vom PSTN ist ein Interworking zum IMS erforderlich.

Bisher ist lediglich ein Interworking zwischen IMS und CS Domain oder PSTN nur für Sprachtelefonie im Standard beschrieben. Die vorliegende Erfindung betrifft das entsprechende Interworking für andere Dienste, insbesondere für Multimediadienste, bspw. für Videotelefonie. Ein Bedarf dafür ist abzusehen, da sowohl in der 3GPP CS Domain wie auch in IMS, hier besonders für Zugangsnetze wie WLAN oder DSL, bzw. neu entstehende Netz-Zutrittsmöglichkeiten (z.B. Worldwide Interoperability for Microwave Access (WiMAX), Videotelefonie an Bedeutung gewinnt.

Das Interworking zwischen IMS und einem CS Netzwerk, also einem PSTN oder einer 3GPP CS Domain, ist ab 3GPP Release 6 nur für reine Sprachtelefonie in 3GPP TS 29.163 spezifiziert. Gemäß TS 29.163 erfolgt das Interworking der so genannten "Call-Control" Signalisierung in der so genannten "Media Gateway Control Function" (MGCF). Das Interworking der Nutzverbindung, also das Weiterreichen und Umpacken sowie nötigenfalls das Transkodieren der Nutzdaten, erfolgt in der so genannten "Internet Multimedia - Media Gateway" (IM-MGW). Die MGCF kontrolliert die IM-MGW mittels des von der ITU-T standardisierten H.248 Protokolls über die so genannte "Mn" Schnittstelle, wie in 3GPP TS 29.332 weiter beschrieben wird.

Im CS Netz wird Bearer Independent Call Control (BICC), siehe ITU-T (International Telecommunication Union - Telecommunication Standardization Sector) Q.1902.x, oder ISDN User Part (ISUP), siehe ITU-T Q.761 ff., zur "out-of-band" Call-Control Signalisierung verwendet. In jenem Fall, wenn die Call-Control Signalisierung getrennt von den Transportverbindungen geführt werden, wird diese Methode auch als "out-of-band" Signalisierung bezeichnet. In weiterer Folge besteht auch die Möglichkeit innerhalb der Transportverbindung Signalisierungs-Meldungen auszutauschen, welche als "in-band" Signalisierungen bezeichnet werden. Im Falle von ISUP wird Time Division Multiplex (TDM) als Transport im CS Netzwerk genutzt, und im Falle von BICC Pakettransport mittels Internet Protocol (IP) oder Asynchron Transfer Modus (ATM). Die Aushandlung, ob reine Sprachtelefonie oder Videotelefonie verwendet wird, kann für ISUP während des Call-Control Signalisierung zum Aufbau des Gesprächs mittels der so genannten ISUP "UDI Fallback" Prozedur erfolgen. Für BICC kann diese Aushandlung mittels dem in 3GPP TS 23.172 standardisierten "Service Change and UDI Fallback" (SCUDIF) erfolgen, der auch während des Gesprächs einen Wechsel zwischen Sprachtelefonie und Videotelefonie ermöglicht. Sowohl "UDI Fallback" wie SCUDIF nützen out-of-band Signalisierung. Daneben ist es für ISUP wie BICC möglich, die genannten Prozeduren nicht zu verwenden, und einen Call-Aufbau nur für Videotelefonie zu versuchen, und im Falle, dass Videotelefonie nicht unterstützt wird, den Call-Aufbau abzubrechen. Im Gegensatz zur optionalen Verhandlung zwischen Sprache und Video erfolgt die Verhandlung der für Videotelefonie verwendeten Sprach und Video-Codecs "in-band", nachdem bereits vorher Videotelefonie ausgewählt und eine entsprechende Transportverbindung (engl. "Bearer") aufgebaut wurde. Für Videotelefonie wird in dem CS-Netzwerk eine so genannte BS30 Datenverbindung mit 64 kbyte/s Bandbreite verwendet. Innerhalb dieser Datenverbindung wird die von der ITU-T standardisierte Protokollsuite H.324 verwendet, wobei in der 3GPP CS Domain die für den Mobilfunk angepasste Variante H.324M ausgewählt wird. Nach dem Aufbau der Datenverbindung wird hierbei die Konfiguration der Multimedia-Verbindung in-band über das von der ITU-T standardisierte H.245 Protokoll ausgehandelt, besonders der verwendete Video-Codec und Sprach-Codec und die Details der jeweiligen Codec Konfiguration. Sprache und Video sowie die Signalisierungsdaten werden mittels des H.223 Protokolls in dieselbe Transportverbindung gemultiplext. Für die 3GPP CS Domain beschreibt TS 26.110 die Verwendung der Protokollsuite bzw. Protokollserie H.324 weiter, wobei insbesondere die so genannte H.324M Konfiguration ausgewählt wird.

Die wichtigsten Abläufe beim Aufbau einer 3G-324M Verbindung (engl. "session") sind die folgenden:
1. Nach dem Start der ISUP oder BICC Rufaufbausignalisierung, erfolgt die Reservierung der notwendigen Ressourcen welche für den gewünschten "Bearer" benötigt werden und in weiterer Folge der Aufbau der Transportverbindung.
2. Start der "in-band" Verhandlung. Zunächst Verhandlung welcher H.223 "Multiplexer Level" für diese Transportverbindung zu verwenden ist.
3. Erkennung des leitenden Endgerätes welches die Multistream-Verbindung eröffnet mittels H.245 Verhandlung, falls notwendig. Diese Funktion ist nur dann notwendig falls es zu einem Konflikt im Zusammenhang beim Öffnen eines bidirektionalen logischen Kanals (=logical channel) kommt. Diese Funktion wird als "Master or Slave determination" (MSD) bezeichnet.
4. Mittels so genannter "Terminal Capability Set" H.245 Nachrichten werden die Fähigkeiten des die Nachricht sendenden Endgeräts übertragen. Solche Meldungen werden unabhängig von beiden Endgeräten gesendet. Diese beschriebenen Fähigkeiten beinhalten folgende Informationen: Audio und Video Codec und deren spezifischen Eigenschaften bzw. dessen Ausprägungen. Funktionaler Umfang des Multiplexers, im Detail welcher Adaptions-Layer unterstützt wird (z.B. "simple" (=einfach) oder "nested" (=verschachtelt) multiplexing) und dessen mobil spezifische Erweiterungen.
5. Aufbau von "logischen" Kanälen je Mediastrom mittels H.245 Signalisierung. Ab diesem Zeitpunkt, entweder mit MSD oder ohne, ist das Endgerät bzw. die IM-MGW dazu bereit, "logical channels" zu öffnen, um den Austausch von Sprach-, und/oder Video-Nutzdaten zu ermöglichen. Bei dem Erstellen eines bidirektionalen "logical channel" wird die Kanalnummer (=channel number) und die endgültigen zu verwendeten "media capabilities" festgelegt.
6. Definition der Multiplexeigenschaften mittels H.245.
7. Start der Übermittlung von Video, Audio/Sprache oder Daten

Im IMS erfolgt die Aushandlung für Videotelefonie "out-of-band" mit Hilfe des so genannten "Session Description Protocol" (SDP), IETF (Internet Engineering Task Force) RFC (Request for Comment) 2327, das mittels des so genannten "Session Initiation Protocol" (SIP), IETF RFC 3261, transportiert wird. Hierbei ist die Aushandlung, ob Sprachtelefonie oder Videotelefonie verwendet wird, mit der Aushandlung der Verwendeten Codecs verbunden, und erfolgt vor oder während des Aufbaus der Bearer. Es wird der so genannte SDP "offeranswer" Mechanismus gemäß RFC 3264 verwendet. Hierbei schickt der Anbieter in der SDP "offer" Nachricht eine Liste von unterstützten Codecs. Nach Erhalt dieser Nachricht schickt der Antwortende eine SDP "Answer" Nachricht, die diejenigen Codecs aus der Liste enthält, die auch er unterstützt und benutzen will. Der Antwortende darf keine Codecs angeben, die nicht in der Liste der SDP "offer" enthalten waren. Im Gegensatz zur CS-Domain werden für Sprache und Video zwei getrennte Transportverbindungen (engl. "Bearer") genutzt, die jeweils das so genannte "Real Time Transport Protocol" (RTP), IETF RFC 3550, verwenden. Für das 3GPP IMS über das General Packet Radio Service (GPRS) Zugangsnetz beschreibt 3GPP TS 26.235 die für Videotelefonie zu verwendenden Codecs.

Im Folgenden werden die auf Seiten der CS Domain und auf Seiten des IMS für Videotelefonie verwendeten Protokolle und Codecs nochmals zusammengefasst:

**CS Netz (insbesondere 3GPP CS-Domain):**

| | |
|---|---|
| Call Control: | BICC oder ISUP. |
| | Aushandlung zwischen reiner Sprachtelefonie und Videotelefonie kann für ISUP mittels "UDI Fallback" und für BICC mittels "SCUDIF" erfolgen. |

**Multimedia Protocol suite: ITU-T H.324M (ITU-T H.324 Annex C) :**

| | |
|---|---|
| Codec-Verhandlung: | ITU-T H.245 in-band Verhandlung über den aufgebauten CS-Bearer mit 64 kbit/s (Kilobit pro Sekunde) |
| Video-Codec: | Unterstützung von H.263 vorgeschrieben ITU-T H.261 optional MP4V-ES (simple video profile level 0) optional |
| Sprach-Codec: | Unterstützung von NB-AMR (Narrow Band Adaptive MultiRate) vorgeschrieben WB-AMR (Wide Band AMR) optional ITU-T G.723.1 empfohlen |
| Transport: | Multiplexen von Sprache und Video in einen Bearer gemäß ITU-T H.223 Annex A + B |

**IMS (Codecs für GPRS (General Packet Radio Service) Zugangsnetz) :**

| | |
|---|---|
| Call Control: | SIP Beinhaltet sowohl Aushandlung zwischen reiner Sprachtelefonie und Videotelefonie, wie auch Codec-Verhandlung. |
| Codec-Verhandlung : | Vor Aufbau des Bearers Out-of-band mittels SDP, das in SIP transportiert wird. |
| Video-Codec: | Unterstützung von H.263 vorgeschrieben ITU-T H.264 optional, MP4V-ES (simple video profile level 0) optional |
| Sprach-Codec: | Unterstützung von NB-AMR und WB-AMR vor-geschrieben. |
| Transport: | Zwei getrennte RTP Bearer für Sprache und Video unter Verwendung von unterschiedlichen so genannten RTP "Payload" Formaten: |
| | Sprache: NB-AMR + WB-AMR: IETF RFC 3267 |
| | Video: H.263: IETF RFC 2429 |
| | H.264 (AVC): IETF RFC 3984 |
| | MPEG-4: IETF RFC 3016 |
| | Synchronisation von parallel RTP Medienströmen erfolgt mittels so genannter RTP "timestamps, die durch das " Real Time Control Protocol" (RTCP, siehe IETF RFC 3550) ausgehandelt werden. |

Neben den oder an Stelle der hier angegeben Codecs können aber auch andere Codecs von den Endgeräten unterstützt werden, insbesondere wenn die CS Endgeräte sich im PSTN befinden oder die IMS Endgeräte GPRS nicht als Zugangsnetz nutzen.

Beim Interworking für ausschließliche Sprachtelefonie wird in beiden Netzen eine out-of-band Signalisierung genutzt. Somit kann eine Umsetzung des Signalisierungsprotokolls an der Grenze beider Datenübertragungsnetze vergleichsweise einfach vorgenommen werden, weil alle Signalisierungsnachrichten auf einfache Art an einer Einheit zusammengeführt werden können. Dagegen wird im CS Netz bspw. bei Videotelefonie In-Band Signalisierung verwendet, die von der IM-MWG empfangen wird, während im IMS Out-Of-Band Signalisierung verwendet wird, die von der MGCF empfangen wird.

Aber auch bei anderen Multimediadiensten oder bei anderen Diensten tritt das Problem auf, die Signalisierung zwischen zwei Datenübertragungsnetzen zusammen zu führen.

Es ist Aufgabe der Erfindung einfache Verfahren zur Signalisierung zwischen zwei verschiedenen Datenübertragungsnetzen anzugeben. Insbesondere ist Aufgabe der Erfindung einfache Verfahren zum Interworking der Signalisierung zwischen zwei verschiedenen Datenübertragungsnetzen anzugeben, wobei in dem ersten Datenübertragungsnetz die Signalisierung In-Band in einer Transportverbindung, die einem Datenübertragungsdienst zwischen zwei Endgeräten oder einer Gruppe von Endgeräten zugeordnet ist, von einer Netzübergangseinheit (z.B. IM-MGW) empfangen oder gesendet wird, während die Signalisierung im zweiten Datenübertragungsnetz out-of-band in einer Steuereinheit (z.B. MGCF) empfangen oder gesendet wird, die mit der ersten Netzwerkeinheit Nachrichten austauscht. Außerdem sollen zugehörige Einheiten angegeben werden.

Die Aufgabe wird durch eine Netzübergangseinheit gemäß dem Patentanspruch 1 und eine Steuereinheit gemäß dem Patentanspruch 3 gelöst. Weiterbildungen sind in den Unteransprüchen angegeben.

Im Folgenden werden Ausführungsbeispiele der Erfindung an Hand der beiliegenden Zeichnungen erläutert. Darin zeigen:
- Figur 1: eine typisch Netzwerkkonfiguration,
- Figur 2: ein Blockschaltbild für eine Steuereinheit und für eine Netzübergangseinheit,
- Figur 3: Verfahrensschritte und Signalisierungsnachrichten einer Steuereinheit und einer Netzübergangseinheit, und
- Figur 4: den Kontext für ein Videotelefongespräch.
Es ist bspw. wünschenswert, auf der CS-Seite und im IMS den gleichen Videocodec und wenn möglich auch den gleichen Sprachcodec zu verwenden, um ein Transkodieren zu vermeiden. Ein Transkodieren insbesondere des Videocodecs, aber in geringerem Umfang auch des Sprachcodecs, würde erhebliche Rechenleistung und Ressourcen in der IM-MGW erfordern. Zudem würde die Übertragung verzögert und die Qualität des Bildes bzw. der Sprache verschlechtert. Wenn die erforderliche Bandbreite für die Codecs auf Seiten der CS-Domaine und dem IMS unterschiedlich sind, würde auf einer Seite zusätzliche Bandbreite verwendet, ohne dass dadurch die Bild- oder Sprachqualität verbessern würde.

Dazu ist es bspw. erforderlich, dass die MGCF und die IM-MGW geeignete Informationen austauschen:
- bspw. bezüglich der Aushandlung der Sprach- und Videocodecs mittels H.245 und SIP/SDP und bezüglich des Aufbaus der Transportverbindung mittels H.223.

Ein Verfahren, zum Austausch geeigneter Informationen bezüglich der Aushandlung der Sprach- und Videocodecs z.B. mittels H.245 und des Aufbaus der Transportverbindung z.B. mittels H.223 zwischen MGCF und IM-MGW ist Gegenstand des vorliegenden Ausführungsbeispiels. Dadurch wird ein Transkodieren bspw. für Videotelefonie weitgehend vermieden. Die MGCF und die IM-MGW verbinden ein CS Netz, also bspw. ein PSTN oder eine 3GPP CS Domain, sowie ein IP Netz, das SIP und SDP zur Aushandlung der Codecs verwenden, also beispielsweise dem IMS. Bei anderen Ausführungsbeispielen wird jedoch ein Transkodieren durchgeführt.

Der so genannte "H.245 Client", also die funktionale Einheit die das H.245 Protokoll terminiert, befindet sich in der MGCF. Dies ist vorteilhaft, da der H.245 Client dadurch einfach über interne Schnittstellen Informationen bezüglich der Auswahl der Codecs und des Ablaufs des Rufaufbaus mit den für den so genannten "Call Control" zuständigen funktionalen Komponenten austauschen kann, vorzugsweise mit der oder den funktionalen Komponente(n), die auf der Seite des IMS für die Behandlung des SIP und des SDP zuständig sind.

Eine zentrale Idee des Ausführungsbeispiels ist, dass aus dem CS Netz empfangene H.245 Nachrichten von der IM-MGW aus dem H.223 Protokoll ausgepackt und dann in der IM-MGW transparent, d.h. unverändert und ohne nötige Interpretation des Inhalts, in das H.248 Protokoll verpackt über die Mn Schnittstelle zur MGCF weitergereicht werden. Ebenso werden H.245 Nachrichten in der MGCF erzeugt und im H.248 Protokoll verpackt an die IM-MGW gesendet. Die IM-MGW entnimmt diese Nachrichten dem H.248 Protokoll und verpackt sie dann transparent innerhalb des H.223 Protokolls.

Beim Rufaufbau konfiguriert die MGCF die IM-MGW so, dass sie H.245 Nachrichten empfängt und empfangene H.245 Nachrichten unbearbeitet weiterreicht bzw. tunnelt. Vorzugsweise nutzt die IM-MGW dazu ein neu zu standardisierendes so genanntes H.248 "Event", das die MGCF angibt, wenn sie die für die Behandlung des gemultiplexten H.223 Protokolls zuständige so genannte "Termination" einrichtet. Wenn die IM-MGW im Folgenden eine oder mehrere H.245 Nachricht(en) empfängt, nutzt sie erfindungsgemäß eine so genannte H.248 "Notify" Nachricht, in der sie das neu definierte "Event" angibt und als Parameter des Events die H.245 Nachricht(en) angibt.

Um eine oder mehrere H.245 Nachricht(en) an die IM-MGW zu senden, nutzt die MGCF vorzugsweise eine so genannte H.248 "Modify" Nachricht, in der sie vorzugsweise ein neu zu standardisierendes so genanntes H.248 "Signal" einfügt und als Parameter des Signals die H.245 Nachricht(en) angibt.

Wenn die MGCF aus der Call Control Signalisierung erkennt oder vermutet, dass auf der CS Seite Videotelefonie gemäß des H.324 gewünscht ist, konfiguriert die MGCF an der IM-MGW zunächst eine so genannte "Termination" zur Behandlung des H.223 Protokolls. Bezüglich der näheren Bedeutung einer "Termination" wird auf H.248 verwiesen. Die MGCF weist die IM-MGW an, die H.223 Verhandlung des so genannten "Multiplex Levels" eigenständig durchzuführen und ihr nach Abschluss der Verhandlung den ausgehandelten Level mitzuteilen. Die MGCF nutzt die erhaltene Information einerseits, um im Weiteren korrekte Angaben in der von ihr erzeugten H.245 "Terminal Capability Set" Nachricht zu machen. Andererseits kann die MGCF am Ausbleiben der Benachrichtigung feststellen, dass die CS-seitige Transportverbindung nicht oder noch nicht für Videotelefonie genutzt wird und darauf in der Call-Control Signalisierung reagieren, beispielsweise durch Umkonfigurieren des Rufs auf einen anderen Dienst wie für Sprachtelephonie oder Beenden der Verbindung.

Vorzugsweise nutzt die MGCF ein neu zu standardisierendes so genanntes H.248 "Signal" innerhalb einer H.248 "Add" oder "Modify" Nachricht, um die IM-MGW aufzufordern, die H.223 Verhandlung des "Multiplex Levels" zu beginnen. Vorzugsweise nutzt die IM-MGW ein neu zu standardisierendes so genanntes H.248 "Event" innerhalb derselben Nachricht, um die MGCF zur Benachrichtigung über den "Multiplex Level" aufzufordern. Wenn die IM-MGW im Folgenden den Level ausgehandelt hat, nutzt sie eine so genannte H.248 "Notify" Nachricht, in der sie das neu definierte "Event" angibt und als Parameter des Events den Level angibt.

Nach erfolgreicher Verhandlung des "Multiplexer Levels" können H.223 Protokoll Daten gesendet werden. H.245 Kommandomeldungen und Kontrollmeldungen können zu diesem frühen Zeitpunkt in speziellen Daten-Paketen übermittelt werden. Dazu werden die H.245 Meldungen bspw. in das sogenannte "Numbered Simple Retransmission Protocol" (NSRP) eingepackt. Gemäß der NSRP Spezifikation nach H.324 darf keine neue H.245 Meldung gesendet werden, solange keine Antwort (engl. Acknowledgement) für die zuletzt gesendeten NSRP Meldung empfangen wurde. Es ist vorteilhaft, wenn über die Mn Schnittstelle das H.245 Protokoll im NSRP verpackt transportiert wird, und der "H.245 Client" in der MGCF auch für die Terminierung des MSRP zuständig ist.

Im Falle eines Rufaufbaus von Seiten des CS Netzes in Richtung des IMS kann es vorkommen, dass der Verbindungsaufbau vom IMS zu einem anderen MGCF weitergeleitet wird. In diesem Fall ist es vorteilhaft, wenn die MGCF die IM-MGW so konfiguriert, dass sie den BS30 Datendienst transparent weiterreicht, zum Beispiel unter Verwendung des so genannten "Clearmode" Codecs, IETF RFC 4040. Die MGCF handelt mittels der mit der anderen MGCF ausgetauschten SIP/SDP Signalisierung den transparenten Transport des Datendienstes aus. In einer Ausführungsform konfiguriert die MGCF die IM MGW zunächst nur für den BS30 Service, und schaltet die Datenverbindung noch nicht durch. Sobald die MGCF von der Seite des IMS Signalisierung bezüglich der ausgewählten Codecs erhält, kann die MGCF erkennen, ob es sich um Videotelefonie handelt, und konfiguriert in diesem Fall die IM-MGW so, dass sie die in-band H.223 Aushandlung startet. Falls dagegen ein transparenter Transport ausgewählt wird, ist keine Umkonfiguration der IM-MGW erforderlich.

Gemäß dem H.245 Standard muss die MGCF als "H.245 Client" eine so genannte H.245 "Terminal Capability Set" Nachricht erzeugen. Diese Nachricht beschreibt die Funktionen des H.324 Protokolls, welche am H.324 Endpunkt in der IM-MGW und MGCF unterstützt werden. Diese beinhaltet mindestens eine der folgenden Informationen:
- Audio und Video Codec und deren spezifischen Eigenschaften bzw. dessen Ausprägungen
- Funktionaler Umfang des Multiplexers, im Detail welcher Adaptions-Layer unterstützt wird (z. B die Verschachtelungstiefe des Multiplexings, also so genanntes "simple" oder "nested" Multiplexing) und dessen mobil spezifische Erweiterungen.
Die MGCF muss zum Bereitstellen dieser Informationen die Fähigkeiten des IM-MGW berücksichtigen, also beispielsweise welche H.223 Protokolloptionen (z.B. die Verschachtelungstiefe für Multiplexing) und welche Codecs die IM MGW unterstützt. Die MGCF besitzt entweder konfiguriertes Wissen über diese Fähigkeiten, oder sie fragt diese Fähigkeiten mittels einer so genannten H.248 "AuditCapabilities" Nachricht bei der IM-MGW ab. Die MGCF berücksichtigt vorzugsweise auch Informationen aus der SIP/SDP Signalisierung bei der Auswahl der in der "Terminal Capability Set" angegebenen Fähigkeiten, insbesondere in Hinblick auf die angegebenen Codecs. Vorzugsweise wählt die MGCF Codecs aus, die sowohl von der MGCF wie auf Seiten des IMS unterstützt werden, um ein Transkodieren zu vermeiden.

Es ist vorteilhaft, wenn die MGCF in einer empfangenen H.245 "Terminal Capability Set" Nachricht enthaltene Informationen bezüglich der Codec in der SIP/SDP Signalisierung weiterreicht.

Sobald mittels so genannter H.245 "Open logical Channel" Nachrichten, die die MGCF sendet oder empfängt, ein Codec und ein logischer H.245 Kanal für einen Medienstrom, beispielsweise einen Audio- oder Videomedienstrom, festgelegt wurde, konfiguriert die MGCF erfindungsgemäß die IM MGW so, dass die den Medienstrom zwischen der Seite des CS Netzes und der Seite des IMS durchreicht. Die MGCF gibt für beide Seiten an, welche Codecs gewählt wurden. Wenn auf beiden Seiten derselbe Codec in derselben Konfiguration gewählt wurde, braucht die IM-MGW keinen Transkoder verwenden.

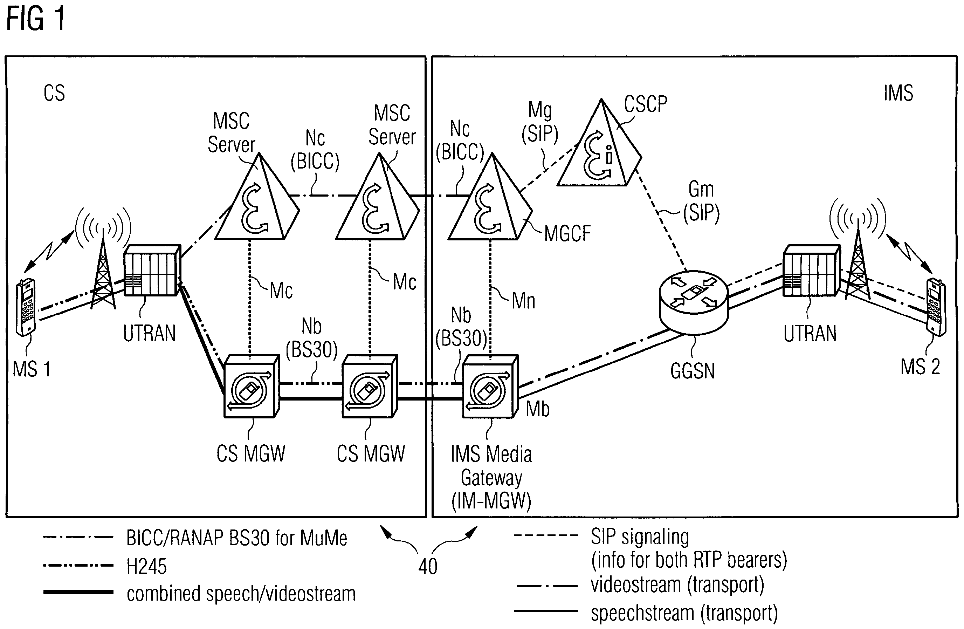

In Figur 1 ist eine typische Netzwerkkonfiguration eines Datenübertragungsnetzes 40 dargestellt, die es ermöglicht, dass ein mit der 3GPP CS Domäne verbundenes mobiles Endgerät MS1 mit einem mit dem IMS verbundenen mobilen Endgerät MS2 kommunizieren kann. Die CS Domäne ist mit Hilfe einer "Media Gateway Control Function" (MGCF) bzw. einer Steuereinheit MGCF und einer IMS Media Gateway (IM-MGW) bzw. einer Netzübergangseinheit IM-MGW mit dem IMS verbunden. Die MGCF kontrolliert die IM-MGW mittels des von der ITU-T standardisierten H.248 Protokolls über die so genannte "Mn" Schnittstelle. Auf Seiten der CS Domäne befinden sich im Kernnetz so genannte "Mobile Switching Center"(MSC)-Server bzw. Vermittlungseinheiten MSC, die über BICC Signalisierung miteinander, siehe Schnittstelle Nc, und mit der MGCF kommunizieren, siehe Schnittstelle Mc. Sie Kontrollieren jeweils CS MGWs. Die CS MGW sind untereinander und mit der IM-MGW über die so genannte "Nb" Schnittstelle verbunden. Für Videotelephonie wird der so genannte "BS30" Datentransportdienst (engl. Bearer Service") verwendet. MS1 ist mittels eines so genannten Funkzugangsnetzes, beispielsweise eines UTRAN (UMTS Terrestrial Radio Access Network), mit einem MSC Server einer CS MGW verbunden. Auf Seiten des IMS kommuniziert die MGCF über eine Schnittstelle Mg mit Hilfe des SIP Call Control Protokolls mit so genannten "call session control functions" (CSCF) bzw. Steuereinheiten CSCF, die die Signalisierung über eine Schnittstelle Gm und den Gateway GPRS support node" (GGSN) bzw. Netzknoten GGSN und ein Funkzugangsnetz, beispielsweise ein UTRAN, zum mobilen Endgerät MS2 weiterreichen. Daten werden von der IMS Media Gateway über die Mb Schnittstelle zum GGSN transportiert, der sie ebenfalls über das Radiozugangsnetz zum MS weiterreicht.

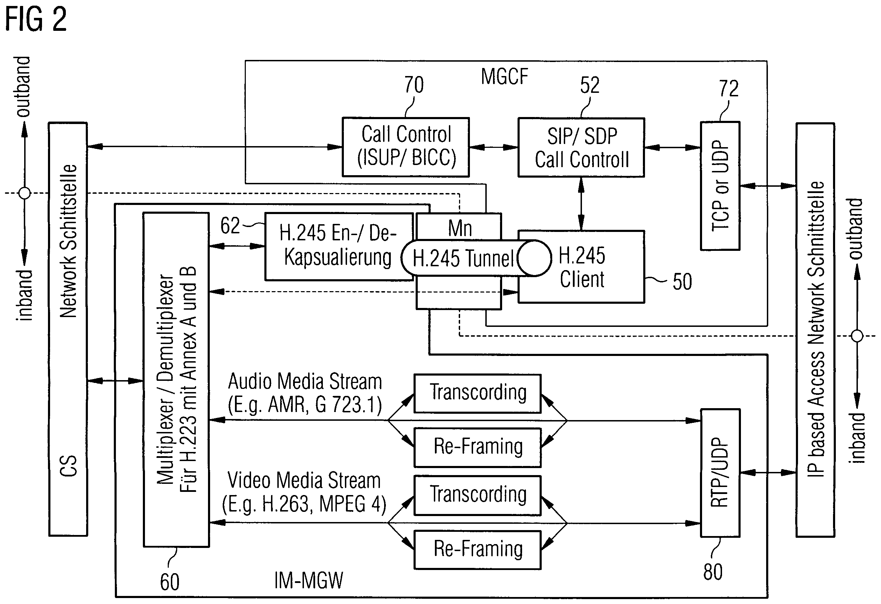

Figur 2 zeigt ein Blockschaltbild bzw. funktionale Schlüsselkomponenten in MGCF und IM-MGW. Ein so genannter H.245 Client 50, also die funktionale Einheit, die das H.245 Protokoll terminiert, befindet sich in der MGCF und tauscht über interne Schnittstellen Informationen bezüglich der Auswahl der Codecs und des Ablaufs des Rufaufbaus mit den für den so genannten "Call Control" zuständigen funktionalen Komponenten bzw. einer Rufsteuerungseinheit 52 aus, vorzugsweise mit der oder den funktionalen Komponente(n), die auf der Seite des IMS für die Behandlung des SIP und des SDP zuständig sind. Von der CS Seite her werden innerhalb des H.223 Protokolls empfangene H.245 Nachrichten von einem H.223 Multiplexer/Demultiplexer 60 in der IM-MGW über eine H.245 En-/Dekapsuliereinheit in der IM-MGW, die die Nachrichten für den Transport mit Hilfe des H.248 Protokolls verpackt, und die Mn Schnittstelle an den H.245 Client 50 weitergereicht. Der H.245 Client 50 tauscht auch Informationen bezüglich des H.223 Protokolls mit dem H.223 Multiplexer/Demultiplexer 60 aus. In der IM-MGW werden so genannte "Media streams" für Audio und Video getrennt behandelt. Abhängig von den auf IMS Seite und CS Seite ausgewählten Audio- und Videocodecs und den Details ihres Transportformats in diesen Netzen kann wahlweise ein transparentes Weiterreichen der Daten, ein so genanntes "Re-Framing", d.h. eine einfache Änderung des Transportformates, oder aber ein vollständige Umwandlung der Daten zwischen verschiedenen Codecs mittels eines so genannten Transkoders erforderlich sein. Durch die hier erläuterten Verfahren lässt sich ein Transkodieren besonders für Videocodecs weitgehend zu vermeiden.

Die MGCF enthält außerdem:
- eine Rufsteuerung 70, die gemäß ISUP/BICC zum CS Netz hin signalisiert und die mit der Rufsteuerung 52 Signalisierungsnachrichten bspw. gemäß einem proprietären Protokoll austauscht. Bspw. führt dann die Rufsteuerung 52 eine Protokollumsetzung durch, d.h. eine Übertragung einzelner Signalisierungsnachrichten des einen Signalisierungsprotokolls in Signalisierungsnachrichten des anderen Signalisierungsprotokolls.
- eine Sende-/Empfangseinheit 72, die zum IMS hin Signalisierungsnachrichten gemäß TCP (Transmission Control Protocol) bzw. UDP (User Datagram Protocol) sendet bzw. empfängt.

Die IM-MGW enthält außerdem:
- zum IMS hin eine Sende-/Empfangseinheit 80, die zum IMS hin Nutzdaten gemäß TCP (Transmission Control Protocol) bzw. UDP (User Datagram Protocol) sendet bzw. empfängt.

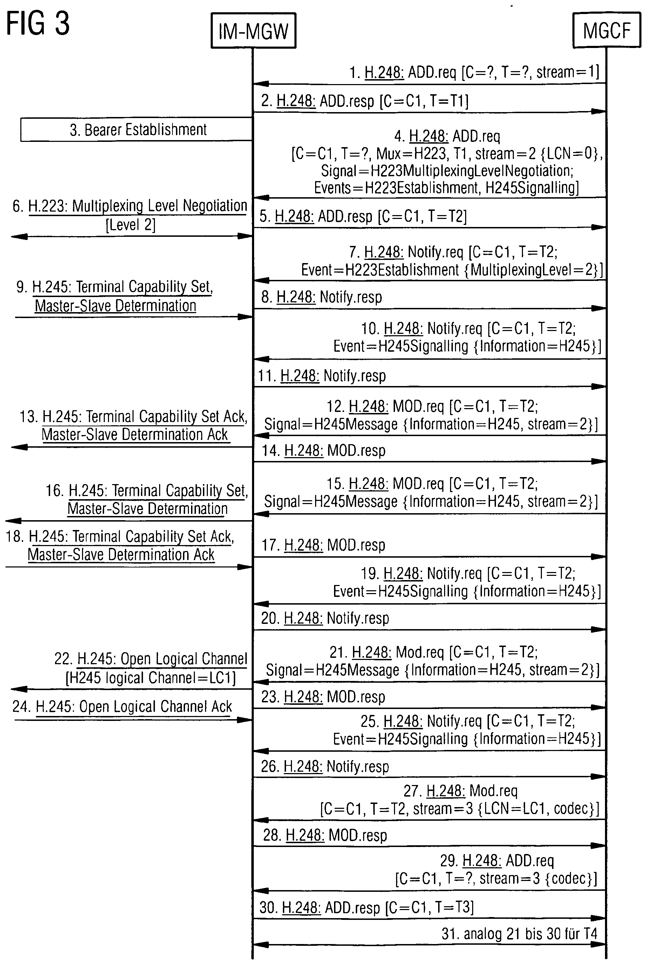

Figur 3 zeigt Verfahrensschritte und Signalisierungsnachrichten der Steuereinheit MGCF und der Netzübergangseinheit IM-MWG. Die Signalisierungs-Schritte für den Aufbau einer Videotelefonie Verbindung zwischen dem Endgerät MS1 und dem Endgerät MS2 sind im Einzelnen wie folgt:
1. Die MGCF beschließt, auf der CS Seite eine H.324 Verbindung für Videotelephonie einzurichten. Zunächst konfiguriert die MGCF die physikalische so genannte "Termination" auf Seite des CS Netzes. Für Pakettransport generiert die MGCF dazu eine neue Termination in einem neuen so genannten H.248 "context" mit Hilfe eines H.248 "Add" Befehls. Für TDM-Transport (Time Devision Multiplexing) kann die MGCF statt dessen eine bestehende Termination, die eine festen Zeitschlitz in einer physikalischen Leitung darstellt, in einen neuen Context verschieben. Die Termination bekommt einen so genannten H.248 "stream" zugewiesen, hier z.B. den stream mit dem Wert 1.
2. Die IM-MGW richtet die Termination entsprechend ein und gibt die Identifier T1 für die Termination und C1 für den Context zurück.
3. Die CS-seitige Transportverbindung wird aufgebaut.
4. Die MGCF richtet gemäß bestehenden H.248.1 und H.248.20 (Gateway control protocol: The use of local and remote descriptors with H.221 and H.223 multiplexing) Standard eine spezielle logische H.248 Termination zum Beschreiben des Multiplexen im selben Context C1 ein und drückt durch den so genannten "Mux" Parameter aus, dass das Multiplexing in Termination T1 beschrieben wird und gemäß des H.223 Standards geschieht. Sie beschreibt den Logischen Kanal des H.223 Protokolls, der zur H.245 Signalisierung verwendet werden soll mittels einen eigenen "streams" der so genannten "logical channel number" (LCN) mit Wert 0 zugewiesen bekommt. Die MGCF weist die IM-MGW an, die H.223 Verhandlung des so genannten "MultiplexingLevels" zu beginnen, vorzugsweise mittels eines neuen so genannten H.248 "signals", das hier "H223MultiplexingLevelNegotiation" genannt wird. Die MGCF weist die IM-MGW auch an, der MGCF eine Nachricht mit dem vereinbarten Multiplexing Level zu schicken, so bald die H.223 Verhandlung des so genannten "MultiplexingLevels" abgeschlossen, vorzugsweise mittels eines neuen so genannten H.248 "events", das hier "H223Establishment" genannt wird. Die MGCF weist die IM-MGW auch an, der MGCF eine Nachricht mit empfangenen H.245 Signalisierung zu schicken, falls die IM-MGW H.245 Nachrichten empfängt. Vorzugsweise nutzt die MGCF dazu ein neues so genanntes H.248 "event", das hier "H245Signalling" genannt wird.
5. Die IM-MGW richtet die neue Termination entsprechend ein und gibt den Identifier T2 zurück.
6. Die IM-MGW richtet die H.223 Verbindung ein und verhandelt mit dem CS-seitigen Endgerät, d.h. mit MS1, dabei den MultiplexingLevel, im Beispiel mit dem Wert 2.
7. Die IM-MGW teilt der MGCF mit, dass die Verhandlung des H.223 Multiplexing Levels abgeschlossen ist und welcher Level ausgewählt wurde. Die MGCF benötigt diese Information im Weiteren, um in der so genannten H.245 "Terminal Capability Set" Nachricht 16 die entsprechenden Fähigkeiten anzugeben. Vorzugsweise nutzt die IM-MGW eine so genannte H.248 "Notify" Nachricht mit dem neuen Event "H223Establishment", das einen geeigneten Parameter, hier "MultiplexingLevel" genannt, zur Angabe des vereinbarten MultiplexingLevels enthält.
8. Die MGCF bestätigt den Erhalt der "Notify" Nachricht.
9. Die IM-MGW erhält von dem CS-seitigen Endgerät MS1 eine so genannte "Terminal Capability Set" H.245 Nachricht, die mit einer so genannten "Master-Slave Determination" H.245 Nachricht kombiniert sein kann.
10. Die IM-MGW reicht die erhaltene H.245 Nachricht oder Nachrichten transparent weiter, d.h. unverändert. Vorzugsweise nutzt die IM-MGW dazu eine so genannte H.248 "Notify" Nachricht mit dem neuen Event "H245Signalling", das einen geeigneten Parameter zur Angabe der H.245 Signalisierung enthält.
11. Die MGCF bestätigt den Erhalt der "Notify" Nachricht gemäß H.248.
12. Gemäß H.245 erfordern die "Terminal Capability Set" H.245 Nachricht und die "Master-Slave Determination" H.245 Nachrichten eine Bestätigung. Da die MGCF die H.245 Signalisierung terminiert, beschließt die MGCF, die erforderlichen H.245 Nachrichten "Terminal Capability Set Ack" und "Master-Slave Determination Ack" über die IM-MGW in der H.245 Verbindung zu verschicken. Die MGCF erzeugt die H.245 Nachrichten, reicht die Nachrichten an die IM-MGW weiter und weist die IM-MGW an, die Nachrichten innerhalb der H.223 Verbindung weiterzureichen. Vorzugsweise nutzt die IM-MGW dazu eine so genannte H.248 "Modify" Nachricht mit dem neuen so genannten Signal, das hier "H245Message" genannt wird und das einen geeigneten Parameter, hier "Information" genannt, zur Angabe der H.245 Signalisierung enthält und auf "stream" 2 bezogen wird, also dem in Nachricht 4 dem logischen H.223 Kanal für die H.245 Signalisierung zugewiesenen "stream".
13. Die IM-MGW reicht die erhaltenen H.245 Nachrichten transparent in der H.223 Verbindung zur Seite des CS Netzes hin weiter.
14. Die IM-MGW bestätigt die "Modify" Nachricht 12.
15. Die MGCF beschließt, eine H.245 Nachricht über die IM-MGW in der H.245 Verbindung zu verschicken, im Beispiel eine so genannte "Terminal Capability Set" H.245 Nachricht, die mit einer so genannten "Master-Slave Determination" H.245 Nachricht kombiniert werden kann. In der H.245 "Terminal Capability Set" Nachricht muss die MGCF den verhandelten MultiplexingLevel sowie Fähigkeiten des IM-MGW berücksichtigen, beispielsweise welche H.223 Protokolloptionen (z.B die Verschachtelungstiefe für Multiplexing) und welche Codecs die IM MGW unterstützt. Die MGCF besitzt entweder konfiguriertes Wissen über diese Fähigkeiten, oder sie fragt diese Fähigkeiten mittels einer so genannten H.248 "AuditCapabilities" Nachricht bei der IM-MGW ab. Die MGCF berücksichtigt vorzugsweise auch Informationen aus der SIP/SDP Signalisierung bei der Auswahl der in der "Terminal Capability Set" angegebenen Fähigkeiten, insbesondere in Hinblick auf die angegebenen Codecs. Vorzugsweise wählt die MGCF vorzugsweise Codecs aus, die sowohl auf Seiten des IMS wie des CS Netzes unterstützt werden, um ein Transkodieren zu vermeiden. Die MGCF erzeugt die H.245 Nachrichten, reicht die Nachrichten an die IM-MGW weiter und weist die IM-MGW an, die Nachrichten innerhalb der H.245 Verbindung weiterzureichen, wie bereits in Nachricht 12 beschrieben.
16. und 17. Analog Nachrichten 13 und 14, d.h. Weiterleiten der H.245 Nachrichten zur CS-Seite und Bestätigen an die MGCF durch IM-MGW.
18. Die IM-MGW erhält von MS1 eine so genannte "Terminal Capability Set Ack" H.245 Nachricht, die mit einer so genannten "Master-Slave Determination Ack" H.245 Nachricht kombiniert ist.
19. und 20. Analog Nachrichten 10 und 11.
21. Die MGCF wählt Codecs für die Videotelefonie aus, wobei sie Informationen aus der SIP/SDP Signalisierung auf Seiten des IMS sowie der in der "Terminal Capability Set" H.245 Nachricht 9 berücksichtigt. Vorzugsweise wählt die MGCF Codecs aus, die sowohl auf Seiten des IMS wie des CS Netzes unterstützt werden, um ein Transkodieren zu vermeiden. Insbesondere entnimmt die MGCF auch die einem ausgewählten Sprach oder Videocodec entsprechende so genannte H.223 "logical channel number" (LCN) den Terminal Capability Set" H.245 Nachrichten 9 oder 16. Die MGCF erzeugt eine so genannte "open logical channel" H.245 Nachricht und gibt darin die LCN des ausgewählten Codecs an. Die MGCF erzeugt die H.245 Nachrichten, reicht die Nachrichten an die IM-MGW weiter und weist die IM-MGW an, die Nachrichten innerhalb der H.245 Verbindung weiterzureichen, wie bereits in Nachricht 12 beschrieben.
   In einem hier nicht dargestellten Fall kann es auch vorkommen, dass die MGCF über die IM-MGW aus dem CS Netz eine "Open Logical Channel" H.245 Nachricht erhält. In diesem Fall wurde im CS Netz aus den in der "Terminal Capability Set" Nachricht 16 angebotenen Fähigkeiten ausgewählt.
22. und 23. Analog Nachrichten 13 und 14, d.h Weiterleiten und Bestätigen durch IM-MGW.
24. Die IM-MGW erhält eine so genannte "Open Logical Channel Ack" H.245 Nachricht von der CS-Seite her.
25. und 26. Analog Nachrichten 10 und 11, d.h. Weiterleiten der H.245 Nachricht von IM-MGW an die MGCF und Bestätigen des Erhalts dieser Nachricht durch die MGCF an die IM-MGW.
27. Die MGCF weist die IM-MGW an, den logischen H.223 Kanal einzurichten, der mit Hilfe der Nachrichten 21 bis 26 bereits über H.245 Signalisierung vereinbart wurde. Dazu sendet die IM-MGW eine H.248 "Modify" Nachricht bezüglich der Multiplexing Termination T2 in der sie einen neuen "stream 3" beschreibt, wobei sie die LCN und den Codec wie in Nachricht 21 angibt.
28. Die IM-MGW bestätigt die "Modify" Nachricht.
29. Die MGCF weist die IM-MGW an, auf Seiten des IMS eine Termination einzurichten, mit der stream 3 verbunden werden soll, so dass die IM-MGW die auf Seiten des IMS oder des CS Netzes empfangenen stream 3 zugeordneten Daten an der jeweils anderen Seite weiterreicht. Dazu sendet die IM-MGW einen H.248 "Add" Nachricht bezüglich Context C1, und gibt darin an, dass "stream 3" befördert werden soll und welcher Codec dafür zu verwenden ist. Wenn in Nachricht 27 und 29 der selbe Codec angegeben ist, erkennt die IM-MGW, dass kein Transkodieren erforderlich ist.
30. Die IM-MGW bestätigt die "Modify" Nachricht.
31. Den Schritten 21 bis 30 analoge Schritte werden durchgeführt, um einen "stream 4" für den Bearer zum Transport der Sprache und den entsprechendenden Sprachcodec für eine Termination T4 zu konfigurieren.

Ähnliche Verfahrensschritte werden auch beim Abbau der Videotelefonieverbindung zwischen dem Endgerät MS1 und dem Endgerät MS2 durchgeführt.

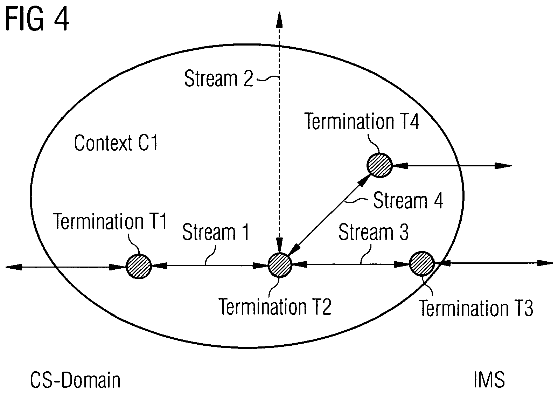

Figur 4 zeigt den Context für einen Video-Call, wobei gilt:
Termination:
   - T1: CS-Domäne (CS-Bearer (BS30) für H.245 control, Sprache und Video),
   - T2: Multiplexing (H.245 control, Sprache, Video),
   - T3: Video mit eigenem RTP-Bearer, und
   - T4: Sprache mit eigenem RTP-Bearer.
Stream:
   - Stream1: zwischen T1 und T2 mit Daten (H.245 control, Sprache und Video),
   - Stream2: terminiert an T2 mit H.245 Control Information,
   - Stream3: zwischen T2 und T3 mit Video-Daten, und
   - Stream4, zwischen T2 und T4 mit Sprach-Daten.

Bei anderen Ausführungsbeispielen sind andere Dienste als Videotelefonie betroffen, bspw. Sprachtelefonie und Textmeldungen. An Stelle der genannten Protokolle werden bei anderen Ausführungsbeispielen auch andere Protokolle eingesetzt.

Bei weiteren Ausführungsbeispielen werden die Funktionen von IM-MGW und MGCF von einer Einheit erbracht, insbesondere von einer Datenbearbeitungseinheit, so dass es dann keine externe Übertragungsstrecke zwischen IM-MGW und MGCF gibt.

Bei einem anderen Ausführungsbeispiel wird eine andere Netzwerkkonfiguration als in Figur 1 verwendet. Bspw. zu einem IP-Terminal im IMS, das über ein anderes Zugangsnetz angeschlossenist, z.B. über DSL ode WLAN oder WiMAX. An Stelle des IMS kann auch allgemein ein anderes Netz verwendet werden, das SIP verwendet. Ebenso kann auch nur im CS Netz ein anderes Endgerät genutzt werden, bspw. ein Festnetztelefon. Alternativ werden in beiden Netzen andere Endgeräte verwendet als in Figur 1 dargestellt.

### Alte Patentansprüche der Stammanmeldung

1. Verfahren zum Weiterleiten von Signalisierungsdaten in einer Netzübergangseinheit (IM-MGW),
   mit den folgenden Schritten:
   in einer Netzübergangseinheit (IM-MGW), die Nutzdaten zwischen einem ersten Datenübertragungsnetz (CS), in dem gemäß einem ersten Signalisierungsverfahren signalisiert wird, und einem zweiten Datenübertragungsnetz (IMS) überträgt, in dem gemäß einem zweiten Signalisierungsverfahren signalisiert wird, aus dem ersten Datenübertragungsnetz (CS) Empfangen von Daten über eine Datenübertragungsverbindung, in der für einen Datenübertragungsdienst zwischen zwei Endgeräten (MS1, MS2) oder einer Gruppe von Endgeräten Signalisierungsdaten und Nutzdaten übertragen werden,
   wobei sich das erste Signalisierungsverfahren von dem zweiten Signalisierungsverfahren unterscheidet,
   in der Netzübergangseinheit (IM-MGW) Trennen von Signalisierungsdaten und von Nutzdaten,
   Weiterleiten der empfangenen Signalisierungsdaten in unveränderter Form von der Netzübergangseinheit (IM-MGW) zu einer Steuereinheit (MGCF),
   in der Netzübergangseinheit (IM-MGW) Weiterleiten der Nutzdaten aus dem ersten Datenübertragungsnetz (CS) in das zweite Datenübertragungsnetz (IMS).
2. Verfahren nach Anspruch 1, dadurch gekennzeichnet dass die Datenübertragungsverbindung eine Verbindung auf einer Protokollebene ist, die sich über der Protokollschicht für die physikalische Datenübertragung befindet,
   oder dass der Schritt geführt wird:
   in der Steuereinheit (MGCF) auf Grund einer durch die Signalisierungsdaten festgelegten Signalisierungsnachricht gemäß erstem Signalisierungsverfahren Erzeugen mindestens einer Signalisierungsnachricht gemäß zweitem Signalisierungsverfahren.
3. Verfahren nach Anspruch 1 oder 2, dadurch gekennzeichnet, dass die Datenübertragungsverbindung mit Hilfe von Signalisierungsnachrichten aufgebaut wird.
4. Verfahren nach einem der vorhergehenden Ansprüche, dadurch gekennzeichnet, dass die Datenübertragungsverbindung zur Übertragung mindestens zweier verschiedener Arten von Nutzdaten dient, insbesondere von Sprachdaten und von Videodaten.
5. Verfahren nach einem der vorhergehenden Ansprüche, dadurch gekennzeichnet, dass das Trennen mit Hilfe der Werte der empfangenen Daten durchgeführt wird.
6. Verfahren nach einem der vorhergehenden Ansprüche, dadurch gekennzeichnet, dass das erste Signalisierungsverfahren ein Signalisierungsverfahren ist, bei dem Signalisierungsdaten und Nutzdaten über die selbe Übertragungsstrecke übertragen werden, insbesondere ein In-Band-Signalisierungsverfahren, und dass das zweite Signalisierungsverfahren ein Signalisierungsverfahren ist, bei dem Signalisierungsdaten über eine andere Übertragungsstrecke als die Nutzdaten übertragen werden, insbesondere ein Out-Of-Band Signalisierungsverfahren.
7. Verfahren nach einem der vorhergehenden Ansprüche, dadurch gekennzeichnet, dass das erste Datenübertragungsnetz (CS) ein durchschaltevermitteltes Datenübertragungsnetz, ein Datenübertragungsnetz mit Datenübertragung gemäß Internetprotokoll oder ein ATM-Übertragungsnetz ist,
   und dass das zweite Datenübertragungsnetz (IMS) ein Datenübertragungsnetz ist, das gemäß Internet Protokoll arbeitet und vorzugsweise SIP zur Signaliserung nutzt.
8. Verfahren nach einem der vorhergehenden Ansprüche, dadurch gekennzeichnet, dass die Signalisierungsdaten in Signalisierungsdatenpaketen und die Nutzdaten in Nutzdatenpaketen übertragen werden,
   und dass das Trennen auf Grund eines in den Datenpaketen enthaltenen Kennzeichens durchgeführt wird, insbesondere auf Grund eines H.223 Multiplexcode-Kennzeichens.
9. Verfahren nach einem der vorhergehenden Ansprüche, gekennzeichnet durch die Schritte:
   Weiterleiten der Signalisierungsdaten zu der Steuereinheit (MGCF) über eine externe Übertragungsstrecke.
10. Verfahren nach einem der vorhergehenden Ansprüche, dadurch gekennzeichnet, dass die Steuereinheit (MGCF) auch Signalisierungsdaten mit Signalisierungsnachrichten gemäß einem weiteren Signalisierungsverfahren für das erste Datenübertragungsnetz (CS) bearbeitet, wobei Signalisierungsnachrichten gemäß BICC oder ISUP übertragen werden.
11. Verfahren nach einem der vorhergehenden Ansprüche, dadurch gekennzeichnet, dass zwischen der Steuereinheit (MGCF) und der Netzübergangseinheit (IM-MGW) Signalisierungsnachrichten gemäß einem Steuer-Signalsierungsverfahren übertragen werden, insbesondere gemäß einem Signalisierungsverfahren gemäß Standard ITU-T H.248 oder oder gemäß dem MEGACO Protokoll oder gemäß dem MGCP Protokoll.
12. Verfahren nach einem der vorhergehenden Ansprüche, gekennzeichnet durch den Schritt:
   Veranlassen des Weiterleitens durch die Steuereinheit (MGCF).
13. Verfahren nach Anspruch 12, dadurch gekennzeichnet das die Steuereinheit (MGCF) das Weiterleiten durch Senden einer Nachricht (4) veranlasst, die ein Kennzeichen (H245Signalling) enthält, das angibt, dass weitergeleitet werden soll, insbesondere ein Kennzeichen für ein H.248 Event.
14. Verfahren nach einem der vorhergehenden Ansprüche, dadurch gekennzeichnet, dass die Netzübergangseinheit (IM-MGW) eine Signalisierungsnachricht mit einer Nachricht weiterleitet, insbesondere einer H.248-Notify-Request-Nachricht (10, 19, 25), die die weiterzuleitende Signalisierungsnachricht als Parameter enthält.
15. Verfahren nach Anspruch 13 und 14, dadurch gekennzeichnet, dass der Parameter ein Parameter eines H.248-Events ist, dessen Kennzeichen (H245Signalling) angibt, dass eine Nachricht weitergeleitet wird.
16. Verfahren nach einem der vorhergehenden Ansprüche, dadurch gekennzeichnet, dass die Steuereinheit (MGCF) eine Signalisierung gemäß erstem Signalisierungsverfahren abschließt oder beginnt.
17. Verfahren nach einem der vorhergehenden Ansprüche, dadurch gekennzeichnet dass, die Steuereinheit (MGCF) der Netzübergangseinheit (IM-MGW) eine Signalisierungsnachricht gemäß erstem Signalisierungsverfahren als Parameter in einer Nachricht (12, 15, 21) übermittelt, insbesondere in einer H.248-Modify-Request-Nachricht,
   wobei die Nachricht ein Kennzeichen (H245Message) enthält, das angibt, dass eine Nachricht gemäß ersten Signalisierungsverfahren als Parameter weitergereicht wird.
18. Verfahren nach Anspruch 17, dadurch gekennzeichnet, dass die weitergereichte Nachricht von der Netzübergangseinheit (IM-MGW) unverändert zur Seite eines Endgeräts (MS1) im ersten Datenübertragungsnetz übertragen wird.
19. Verfahren nach einem der vorhergehenden Ansprüchen, dadurch gekennzeichnet, dass die Signalisierungsdaten und die Nutzdaten zu der Netzübergangseinheit gemäß einem Multiplexverfahren übertragen werden, insbesondere gemäß dem im Standard ITU-T H.223 festgelegten Verfahren.
20. Verfahren nach einem der vorhergehenden Ansprüche, dadurch gekennzeichnet, dass die Steuereinheit (MGCF) die Netzübergangseinheit veranlasst mit der Aushandlung eines Multiplexlevels zu beginnen,
   vorzugsweise durch Senden einer Nachricht (4), die ein Kennzeichen (H223MultiplexingLevelNegotiation) enthält, das angibt, dass mit der Aushandlung des Multiplexlevels begonnen werden soll, insbesondere ein H.248 Signal-Kennzeichen.
21. Verfahren nach einem der vorhergehenden Ansprüche 20, dadurch gekennzeichnet, dass die Steuereinheit (MGCF) die Netzübergangseinheit veranlasst der Steuereinheit (MGCF) eine Nachricht zu senden, in der der Wert eines ausgehandelten Multiplexlevels angegeben ist, insbesondere durch Senden einer Nachricht (4), die ein Kennzeichen (H223Establishment) enthält, das angibt, dass das der Wert des Multiplexlevels zur Steuereinheit (MGCF) übertragen werden soll, insbesondere ein H.248 Event-Kennzeichen.
22. Verfahren nach einem der vorhergehenden Ansprüche, dadurch gekennzeichnet, dass die Netzübergangseinheit (IM-MGW) der Steuereinheit (MGCF) nach Aushandeln eines Multiplexlevels den Wert des Multiplexlevels in einer Nachricht (7) übermittelt, insbesondere in einer H.248-Notify-Request-Nachricht.
23. Verfahren nach einem der vorhergehenden Ansprüche, dadurch gekennzeichnet, dass das erste Signalisierungsverfahren ein Verfahren gemäß Protokoll ITU-T H.245 ist,
   und/oder dass das zweite Signalisierungsverfahren das SIP-Signalisierungsverfahren ist.
24. Verfahren nach einem der vorhergehenden Ansprüche, dadurch gekennzeichnet, dass die Steuereinheit (MGCF) beim Erzeugen einer Signalisierungsnachricht gemäß erstem Signalisierungsprotokoll die Eigenschaften der Netzübergangseinheit (IM-MGW) berücksichtigt, vorzugsweise beim Erzeugen einer TerminalCapabilitySet-Nachricht gemäß H.245.
25. Verfahren nach einem der vorhergehenden Ansprüchen, gekennzeichnet durch die Schritte:
   in der Netzübergangseinheit (IM-MGW) Empfangen von Signalisierungsdaten, die von einer Steuereinheit (MGCF) an der Grenze zwischen dem ersten Datenübertragungsnetz (CS) und dem zweiten Datenübertragungsnetz (IMS) kommen über eine erste Übertragungsstrecke,
   in der Netzübergangseinheit (IM-MGW) Empfangen von Nutzdaten aus dem zweiten Datenübertragungsnetz (IMS) über eine zweite Übertragungsstrecke, wobei die Nutzdaten durch die Signalisierungsdaten betroffen sind,
   in der Netzübergangseinheit (IM-MGW) Senden der empfangenen Signalisierungsdaten und der empfangenen Nutzdaten über die selbe Übertragungsstrecke.
26. Verfahren zum Weiterleiten von Signalisierungsdaten in einer Steuereinheit (MGCF),
   mit den folgenden Schritten:
   in einer Steuereinheit (MGCF), die zur Übertragung von Signalisierungsdaten zwischen einem ersten Datenübertragungsnetz (CS), in dem gemäß einem ersten Signalisierungsverfahren signalisiert wird, und einem zweiten Datenübertragungsnetz (IMS) dient, in dem gemäß einem zweiten Signalisierungsverfahren signalisiert wird, Empfangen von Signalisierungsdaten gemäß erstem Signalisierungsverfahren,
   wobei das erste Signalisierungsverfahren ein Signalisierungsverfahren ist bei dem eine Datenübertragungsverbindung verwendet wird, in der für einen Datenübertragungsdienst zwischen zwei Endgeräten (MS1, MS2) oder einer Gruppe von Endgeräten die Signalisierungsdaten gemäß dem ersten Signalisierungsverfahren und Nutzdaten übertragen werden,
   und wobei das zweite Signalisierungsverfahren ein Signalisierungsverfahren ist, bei dem Signalisierungsdaten und Nutzdaten über voneinander verschiedene Übertragungsstrecken übertragen werden.
27. Verfahren nach Anspruch 26, gekennzeichnet durch den Schritt:
   auf Grund einer durch die Signalisierungsdaten festgelegten Signalisierungsnachricht gemäß erstem Signalisierungsverfahren Erzeugen mindestens einer Signalisierungsnachricht gemäß zweitem Signalisierungsverfahren in der Steuereinheit (MGCF).
28. Verfahren nach Anspruch 26 oder 27, gekennzeichnet durch den Schritt:
   Veranlassen des Zusendens der Signalisierungsdaten von einer Netzübergangseinheit (IM-MGW) durch die Steuereinheit (MGCF), wobei die Netzübergangseinheit (IM-MGW) von den Signalisierungsdaten betroffene Nutzdaten zwischen dem ersten Datenübertragungsnetz (CS) und dem zweiten Datenübertragungsnetz (IMS) weiterleitet.
29. Verfahren nach einem der Ansprüche 26 bis 28, dadurch gekennzeichnet, dass die Steuereinheit in einem Verfahren nach einem der Ansprüche 1 bis 25 eingesetzt wird.
30. Verfahren nach einem der Ansprüche 26 bis 29, gekennzeichnet durch die Schritte:
   in der Steuereinheit (MGCF) Empfangen von Signalisierungsdaten gemäß zweitem Signalisierungsverfahren,
   auf Grund einer durch die empfangenen Signalisierungsdaten gemäß zweitem Signalisierungsverfahren festgelegten Signalisierungsnachricht Erzeugen einer Signalisierungsnachricht gemäß erstem Signalisierungsverfahren.
31. Netzübergangseinheit (IM-MGW), insbesondere zum Durchführen eines Verfahrens nach einem der vorhergehenden Ansprüche, mit einer Empfangseinheit (60), die Signalisierungsdaten gemäß einem ersten Signalisierungsverfahren für ein erstes Datenübertragungsnetz (CS) empfängt und die von diesen Signalisierungsdaten betroffene Nutzdaten aus dem ersten Datenübertragungsnetz (CS) empfängt,
   mit einer Signalisierungsdatensendeeinheit (62), die an der Empfangseinheit (60) empfangene Signalisierungsdaten unverändert versendet,
   mit einer Nutzdatensendeeinheit (80), die die an der Empfangseinheit (60) empfangenen Nutzdaten in das zweite Datenübertragungsnetz (IMS) sendet,
   und mit einer Trenneinheit, die Signalisierungsdaten und Nutzdaten voneinander trennt und die die Signalisierungsdaten an die Signalisierungsdatensendeeinheit (62) und die die Nutzdaten an die Nutzdatensendeeinheit (80) weiterleitet.
32. Steuereinheit (MGCF), insbesondere zum Durchführen eines Verfahrens nach einem der Ansprüche 1 bis 30,
   mit einer Empfangseinheit (50), die Signalisierungsdaten gemäß einem ersten Signalisierungsverfahren für ein erstes Datenübertragungsnetz (CS) empfängt,
   mit einer Sendeeinheit (72), die Signalisierungsdaten gemäß einem zweiten Signalisierungsverfahren für ein zweites Datenübertragungsnetz (CS) sendet,
   wobei das erste Signalisierungsverfahren ein Signalisierungsverfahren ist, bei dem eine Datenübertragungsverbindung verwendet wird, in der für einen Datenübertragungsdienst zwischen zwei Endgeräten (MS1, MS2) oder einer Gruppe von Endgeräten die Signalisierungsdaten gemäß dem ersten Signalisierungsverfahren und Nutzdaten übertragen werden,
   und wobei das zweite Signalisierungsverfahren ein Signalisierungsverfahren ist, bei dem Signalisierungsdaten und Nutzdaten über voneinander verschiedene Übertragungsstrecken übertragen werden,
   und mit einer Umwandlungseinheit (52) die ausgehend von einer Signalisierungsnachricht gemäß dem ersten Signalisierungsverfahren eine entsprechende Signalisierungsnachricht gemäß dem zweiten Signalisierungsverfahren erzeugt.

### Bezugszeichenliste

1 bis 31 Nachricht
40 Datenübertragungsnetz
CS durchschaltevermitteltes Datenübertragungsnetz
IMS Internet
MS1, MS2 Mobilfunktelefon
MGCF Steuereinheit
IMS-MGW Netzübergangseinheit
CS MGW Netzübergangseinheit
MSC Vermittlungseinheit
Mn Schnittstelle
Mc Schnittstelle
Nb Schnittstelle
Nc Schnittstelle
Mg Schnittstelle
Gm Schnittstelle
CSCF Steuereinheit
GGSN Netzknoten
50 H.245-Client
52 Rufsteuerungseinheit
60 Multiplexer/Demultiplexer
62 En-/Dekapsuliereinheit
70 Rufsteuerungseinheit
72 Sende-/Empfangseinheit
80 Sende-/Empfangseinheit

## Patentansprüche

1. Netzübergangseinheit, mit einer Empfangseinheit (60), eingerichtet zum Empfangen von Signalisierungsdaten gemäß einem ersten Signalisierungsverfahren für ein erstes Datenübertragungsnetz und von Nutzdaten aus dem ersten Datenübertragungsnetz,
mit einer Signalisierungsdatensendeeinheit (62), eingerichtet zum an der Empfangseinheit (60) empfangenen Signalisierungsdaten in das H.248 Protokoll Verpacken und unverändert Versenden,
mit einer Nutzdatensendeeinheit (80), eingerichtet zum Versenden der an der Empfangseinheit (60) empfangenen Nutzdaten in ein zweites Datenübertragungsnetz,
und mit einer Trenneinheit, eingerichtet zum voneinander Trennen der Signalisierungsdaten und Nutzdaten und zum Weiterleiten der Signalisierungsdaten an die Signalisierungsdatensendeeinheit (62) und der Nutzdaten an die Nutzdatensendeeinheit (80).

2. Netzübergangseinheit nach Anspruch 1, wobei
das erste Signalisierungsverfahren ein Verfahren gemäß Protokoll ITU-T H.245 ist.

3. Steuereinheit,
mit einer das H.245 Protokoll terminierenden Einheit (50), eingerichtet zum Empfangen von in das H.248 Protokoll verpackten H.245 Signalisierungsdaten eines ersten Datenübertragungsnetzes, und zum Erzeugen, in das H.248 Protokoll Verpacken und Versenden von H.245 Signalisierungsdaten,
mit einer Sendeeinheit (72), eingerichtet zum Versenden von Signalisierungsdaten gemäß einem weiteren, sich von dem H.245 unterscheidenden Signalisierungsverfahren für ein zweites Datenübertragungsnetz.

4. Steuereinheit nach Anspruch 3, wobei
das weitere Signalisierungsverfahren ein Signalisierungsverfahren ist, bei dem Signalisierungsdaten und Nutzdaten über voneinander verschiedene Übertragungsstrecken übertragen werden.

5. Steuereinheit nach Anspruch 4, wobei
das weitere Signalisierungsverfahren das SIP Signalisierungsverfahren ist.

## Claims

1. Media gateway, with a receiving unit (60), configured to receive signalling data in accordance with a first signalling method for a first data transmission network and payload data from a first data transmission network,
with a signalling data transmit unit (62), configured to pack signalling data received at the receiving unit (60) into the H.248 protocol and transmit it unchanged,
with a payload data transmit unit (80), configured to transmit the payload data received at the receiving unit (60) into a second data transmission network,
and with a separating unit, configured to separate the signalling data from the payload data and to forward the signalling data to the signalling data transmit unit (62) and the payload data to the payload data transmit unit (80).

2. Media gateway according to claim 1, wherein
the first signalling method is a method in accordance with protocol ITU-T H.245.

3. Control unit,
with a unit (50) that terminates the H.245 protocol, configured to receive H.245 signalling data of a first data transmission network packed into the H.248 protocol, and to generate, pack into the H.248 protocol and transmit H.245 signalling data, with a transmit unit (72), configured to transmit signalling data in accordance with a further signalling method different from H.245 for a second data transmission network.

4. Control unit according to claim 3, wherein
the further signalling method is a signalling method in which signalling data and payload data are transmitted via transmission paths which differ from one another.

5. Control unit according to claim 4, wherein
the further signalling method is the SIP signalling method.

## Revendications

1. Unité d'interconnexion, avec une unité de réception (60) installée pour recevoir des données de signalisation selon un premier procédé de signalisation pour un premier réseau de transmission de données et des données utiles provenant du premier réseau de transmission de données,
avec une unité d'émission de données de signalisation (62) installée pour emballer les données de signalisation reçues par l'unité de réception (60) dans le protocole H.248 et les envoyer sans les modifier,
avec une unité d'émission de données utiles (80) installée pour envoyer les données utiles reçues par l'unité de réception (60) dans un deuxième réseau de transmission de données,
et avec une unité de séparation installée pour séparer entre elles les données de signalisation et les données utiles et pour transmettre les données de signalisation à l'unité d'émission de données de signalisation (62) et les données utiles à l'unité d'émission de données utiles (80).

2. Unité d'interconnexion selon la revendication 1, le premier procédé de signalisation étant un procédé selon le protocole ITU-T H.245.

3. Unité de commande, avec une unité d'ordonnancement du protocole H.245 (50) installée pour recevoir des données de signalisation H.245 d'un premier réseau de transmission de données emballées dans le protocole H.248 et pour générer, emballer dans le protocole H.248 et envoyer des données de signalisation H.245, avec une unité d'émission (72) installée pour envoyer des données de signalisation selon un autre procédé de signalisation se distinguant du H.245 pour un deuxième réseau de transmission de données.

4. Unité de commande selon la revendication 3, l'autre procédé de signalisation étant un procédé de signalisation avec lequel les données de signalisation et les données utiles sont transmises sur des voies de transmission différentes l'une de l'autre.

5. Unité de commande selon la revendication 4, l'autre procédé de signalisation étant le procédé de signalisation SIP.
